# EUROPÄISCHE PATENTANMELDUNG

(11) **EP 4 074 995 A1**
(43) Veröffentlichungstag der Anmeldung: **19.10.2022**
(21) Anmeldenummer: 22165789.3
(22) Anmeldetag: 31.03.2022
(51) Int. Cl.: F16C 11/06

(54) **GELENKVERBINDUNG UND VERFAHREN ZUM BEWEGLICHEN KOPPELN EINER ERSTEN KOMPONENTE AN EINER ZWEITEN KOMPONENTE**

(30) Priorität: 15.04.2021 DE 102021109529
(71) Anmelder: Airbus Operations GmbH, 21129 Hamburg (DE)
(72) Erfinder: Benthien, Hermann, 21129 Hamburg (DE); Poppe, Andreas, 21129 Hamburg (DE)

(57) **Zusammenfassung**

Die Erfindung betrifft eine Gelenkverbindung mit einem Aufnahmeelement (20) und einem Verbindungselement (30). Das Aufnahmeelement (20) umfasst einen Aussparungsbereich (21), der einen Öffnungsaussparungsbereich (22) an einer Oberfläche (23) des Aufnahmeelements (20) und einen Innenaussparungsbereich (24) umfasst. Der Innenaussparungsbereich (24) hat eine erste Querabmessung (A₁), die größer ist als eine erste Querabmessung (B₁) des Öffnungsaussparungsbereichs (22). Das Verbindungselement (30) umfasst einen Halsbereich (31) und einen ersten Endbereich (32) mit einer gekrümmten Oberflächenkontur (33), wobei beide entlang einer Verbindungselementachse (35) angeordnet sind. Der erste Endbereich (32) hat eine erste Querausdehnung (C₁), die größer ist als eine erste Querausdehnung (D₁) des Halsbereichs (31). Das Verbindungselement (30) ist in den Aussparungsbereich (21) des Aufnahmeelements (20) einführbar, wenn sich das Verbindungselement (30) und das Aufnahmeelement (20) in einer vorgegebenen ersten Orientierung (40) zueinander befinden. Das Verbindungselement (30) ist in dem Aussparungsbereich (21) des Aufnahmeelements (20) in einen Verriegelungszustand (13) überführbar, bei dem sich das Verbindungselement (30) und das Aufnahmeelement (20) in einer vorgegebenen zweiten Orientierung (60) zueinander befinden, so dass ein Herausbewegen des Verbindungselements (30) aus dem Aussparungsbereich (21) unterbunden ist.

## Beschreibung

### Gebiet der Erfindung

Die vorliegende Erfindung betrifft das Herstellen von beweglichen Gelenkkopplungen zwischen Komponenten. Insbesondere betrifft die vorliegende Erfindung eine Gelenkverbindung zum beweglichen Koppeln einer ersten Komponente an einer zweiten Komponente sowie ein Luftfahrzeug mit einer solchen Gelenkverbindung und ein Verfahren zum Herstellen einer beweglichen Befestigung einer ersten Komponente an einer zweiten Komponente.

### Hintergrund der Erfindung

Im allgemeinen Maschinenbau werden zu verbindende Komponenten oftmals mittels beweglicher bzw. flexibler Verbindungen miteinander gekoppelt. Beispielsweise kann es in der Fahrzeugtechnik oder Luftfahrzeugtechnik erforderlich sein, dass Einbauten bzw. Sekundärstrukturen innerhalb des Fahrzeugs bzw. Luftfahrzeugs sicher befestigt sind, um bestimmte Mindestanforderungen an die Betriebssicherheit zu gewährleisten. Insbesondere werden Belastungen, die auf die Fahrzeugeinbauten wirken, mittels einer Aufhängung von den Einbauten in die Primärstruktur des Fahrzeugs bzw. Luftfahrzeugs eingeleitet. Die strukturelle Integrität kann dabei auch erfordern, dass einige solcher Komponenten beweglich miteinander verbunden werden, um bestimmten Anforderungen für die jeweils gewünschte Krafteinleitung in die Primärstruktur gerecht zu werden. Darüber hinaus sollten Gelenkverbindungen auch einfach herzustellen sein, das heißt einfach montiert werden können. Dies kann insbesondere relevant werden, wenn die Sicht auf die Montagestelle für die Gelenkverbindung durch angrenzende Bauteile verdeckt ist oder die Montagestelle schwer zugänglich ist.

DE 10 2017 131 150 A1 und US 2019 / 0 193 872 A1 beschreiben ein Modulsystem zur Installation von Modulen an einer Rumpfstruktur eines Fahrzeugs. Das System umfasst mehrere Module mit daran angeordneten Haltern zum Befestigen an einer Rumpfstruktur, mehrere auf einer Fußbodenebene fahrbare Montagegestelle und mindestens ein zumindest bereichsweise flexibles Verbindungselement, das sich über sämtliche Module erstreckt und diese in einem an der Rumpfstruktur installierten Zustand miteinander koppelt.

### Zusammenfassung der Erfindung

Es ist eine Aufgabe der Erfindung, die Herstellung einer beweglichen Gelenkverbindung zu vereinfachen.

Diese Aufgabe wird durch die Gegenstände der unabhängigen Ansprüche gelöst. Beispielhafte Ausführungsformen ergeben sich aus den abhängigen Ansprüchen und der nachfolgenden Beschreibung.

Gemäß einem Aspekt der Erfindung ist eine Gelenkverbindung zum beweglichen Koppeln einer ersten Komponente an einer zweiten Komponente angegeben. Die Gelenkverbindung umfasst ein Aufnahmeelement und ein Verbindungselement. Es kann vorgesehen sein, dass die erste Komponente an dem Aufnahmeelement und die zweite Komponente an dem Verbindungselement befestigt ist. Das Aufnahmeelement weist einen Aussparungsbereich auf, der einen Öffnungsaussparungsbereich an einer Oberfläche des Aufnahmeelements und einen Innenaussparungsbereich umfasst, wobei der Innenaussparungsbereich entlang einer Aussparungsachse über den Öffnungsaussparungsbereich zugänglich ist. Der Innenaussparungsbereich hat eine erste Querabmessung, die größer ist als eine erste Querabmessung des Öffnungsaussparungsbereichs. Das Verbindungselement weist einen Halsbereich und einen ersten Endbereich mit einer gekrümmten Oberflächenkontur auf, wobei der Halsbereich und der erste Endbereich entlang einer Verbindungselementachse angeordnet sind. Der erste Endbereich hat eine erste Querausdehnung, die größer ist als eine erste Querausdehnung des Halsbereichs. Das Verbindungselement ist in den Aussparungsbereich des Aufnahmeelements zumindest teilweise einführbar, wenn sich das Verbindungselement und das Aufnahmeelement in einer vorgegebenen ersten Orientierung zueinander befinden. Das Verbindungselement ist in dem Aussparungsbereich des Aufnahmeelements in einen Verriegelungszustand überführbar, bei dem sich das Verbindungselement und das Aufnahmeelement in einer vorgegebenen zweiten Orientierung zueinander befinden, so dass ein Herausbewegen des Verbindungselements aus dem Aussparungsbereich unterbunden ist. Ausgehend vom Verriegelungszustand kann das Verbindungselement dann gegenüber dem Aufnahmeelement rotiert werden, um somit die bewegliche Kopplung zwischen der ersten Komponente und der zweiten Komponente bereitzustellen.

Mit der erfindungsgemäßen Gelenkverbindung wird eine einfach aufgebaute und damit einfach herzustellende und kostengünstige Gelenkverbindung bereitgestellt, die eine bewegliche Befestigung von beliebig ausgestalteten Komponenten untereinander ermöglicht. Ein wesentlicher Vorteil der Gelenkverbindung ist ihre Selbstzentrierungseigenschaft bei der Montage, das heißt beim Einführen des Verbindungselements in den Aussparungsbereich des Aufnahmeelements. Insbesondere weist der erste Endbereich des Verbindungselements, der bei der Montage dem Öffnungsaussparungsbereich des Aufnahmeelements zugewandt ist, eine gekrümmte Oberflächenkontur auf, die derart ausgestaltet ist, dass sich der erste Endbereich und damit das Verbindungselement beim Kontakt mit einer Öffnungsbegrenzung des Öffnungsaussparungsbereichs selbst ausrichtet bzw. selbst zentriert. Diese Selbstzentrierung vereinfacht das Einführen des Verbindungselements in den Aussparungsbereich sowie das anschließende Drehen des Verbindungselements in den Verriegelungszustand, so dass eine Montage auch ohne Sichtkontakt zur Gelenkverbindung einfach möglich ist.

Die Montage kann dabei so erfolgen, dass der erste Endbereich in den Aussparungsbereich eingeführt bzw. eingeschoben wird, indem sich das Verbindungselement gegenüber dem Aufnahmeelement selbststätig in die richtige Montageausrichtung dreht, sobald die gekrümmte Oberflächenkontur des ersten Endbereichs des Verbindungselements mit dem Öffnungsaussparungsbereich und damit der Oberfläche des Aufnahmeelements in Kontakt kommt. Nachdem sich das Verbindungselement und das Aufnahmeelement in der ersten vorgegebenen Orientierung zueinander befinden, kann der erste Endbereich des Verbindungselements vollständig in den Innenaussparungsbereich des Aufnahmeelements hineingeschoben werden. Dort angekommen, wird die Gelenkverbindung in den Verriegelungszustand verbracht, indem das längliche Verbindungselement um seine Achse, also um die Verbindungselementachse, gedreht wird.

Der Verriegelungszustand verhindert das Herausbewegen bzw. Herausziehen des Verbindungselements aus dem Aussparungsbereich des Aufnahmeelements, jedoch bleibt zumindest eine eingeschränkte Rotationsbewegung des Verbindungselements gegenüber dem Aufnahmeelement grundsätzlich möglich, um somit die bewegliche Kopplung, wie oben beschrieben, zu ermöglichen. Folglich stellt die Gelenkverbindung aufgrund der flexiblen Kopplungsmöglichkeit unterschiedlicher zu verbindender Komponenten einen geeigneten Toleranzausgleich bereit, der insbesondere für die strukturelle Integrität eine große Rolle spielt. Die Gelenkverbindung vermeidet dabei das Auftreten von hohen Drehmomenten innerhalb der Verbindung, wobei dennoch die vorteilhaften Eigenschaften hinsichtlich Toleranzkompensation und Selbstzentrierung bzw. Montageeinfachheit erreicht werden.

Das Aufnahmeelement kann den ersten Endbereich größtenteils oder vollständig umschließen, wenn der erste Endbereich in den Innenaussparungsbereich des Aufnahmeelements eingeführt ist und sich der erste Endbereich innerhalb des Innenaussparungsbereichs befindet. Auf diese Weise kann quasi ein geschlossenes Profil der Gelenkverbindung bereitgestellt werden. Die Tatsache, dass die erfindungsgemäße Gelenkverbindung mit vergleichsweise wenigen Einzelteilen auskommt, vereinfacht nicht nur die Montage, sondern führt auch zu einem leichteren Gesamtdesign der Gelenkverbindung, was insbesondere im Leichtbau, beispielswiese in der Luftfahrzeugtechnik, von Bedeutung ist.

Das Verbindungselement und/oder das Aufnahmeelement können zum Beispiel ein metallisches Material oder ein Kunststoffmaterial aufweisen. Faserverstärkte Kunststoffe kommen ebenso in Betracht. Im Falle von metallischem Material kann das Verbindungselement und/oder das Aufnahmeelement aus Aluminium, insbesondere aus oberflächenbeschichtetem Aluminium, Titan oder Stahl gefertigt sein. Im Falle von Kunststoffmaterial kann das Verbindungselement und/oder das Aufnahmeelement zum Beispiel thermoplastischen Kunststoff aufweisen, der auch faserverstärkt sein kann.

Das Aufnahmeelement kann an der ersten Komponente befestigt sein oder in diese integriert sein. Analog kann das Verbindungselement an der zweiten Komponente befestigt sein oder in diese integriert sein. Damit kann die erste Komponente über die Gelenkverbindung beweglich mit der zweiten Komponente gekoppelt werden, so dass die erste Komponente relativ zur zweiten Komponente rotierbar ist, wobei die Rotation im Verriegelungszustand der Gelenkverbindung ermöglicht wird, das heißt wenn sich das Verbindungselement und das Aufnahmeelement in irgendeiner von mehreren vorgegebenen zweiten Orientierungen zueinander befinden, die sich jedenfalls von der ersten Orientierung unterscheidet. Insbesondere kann vorgesehen sein, dass sich das Verbindungselement bzw. der erste Endbereich des Verbindungselements nur dann in den Innenaussparungsbereich des Aufnahmeelements einführen oder wieder herausbewegen lässt, wenn sich das Verbindungselement und das Aufnahmeelement im Wesentlichen oder genau in der vorgegebenen ersten Orientierung zueinander befinden. In jeglicher anderen, von der ersten Orientierung abweichenden Orientierung kann das Einführen oder Herausbewegen unterbunden sein. Dieser Zusammenhang wird in der Figurenbeschreibung noch genauer ersichtlich werden.

Gemäß einer Ausführungsform ist das Aufnahmeelement im Verriegelungszustand zumindest teilweise um den ersten Endbereich des Verbindungselementes rotierbar.

Der Verriegelungszustand kann damit einen Zustand beschreiben, bei dem zwar ein Herausbewegen des ersten Endbereichs aus dem Innenaussparungsbereich des Aufnahmeelements unterbunden und damit verriegelt ist, jedoch kann eine Rotationsbewegung des Verbindungelements in Bezug auf das Aufnahmeelement möglich bleiben. Der Verriegelungszustand kann mit anderen Worten eine relative Translationsbewegung zwischen dem Verbindungselement und dem Aufnahmeelement unterbinden, jedoch eine Rotationsbewegung beider Teile zueinander ermöglichen.

Gemäß einer Ausführungsform ist das Verbindungselement durch Verschieben des Verbindungselements entlang der Aussparungsachse in den Aussparungsbereich einführbar.

Dabei kann der Öffnungsaussparungsbereich des Aufnahmeelements derart ausgestaltet sein, dass der erste Endbereich des Verbindungselements in genau einer Orientierung (erste Orientierung) bezüglich des Öffnungsaussparungsbereichs durch diesen hindurchpasst und in dieser Orientierung in den Aussparungsbereich eingeführt werden kann. Beim Einführen wird das Verbindungselement dabei insbesondere entlang der Verbindungselementachse und/oder der Aussparungsachse in den Aussparungsbereich eingeschoben. Mit anderen Worten kann das Einführen ermöglicht werden, wenn Verbindungselementachse und Aussparungsachse aufeinanderliegen, zumindest jedoch parallel ausgerichtet sind.

Gemäß einer Ausführungsform ist das Verbindungselement in dem Aussparungsbereich des Aufnahmeelements durch eine Drehbewegung um die Verbindungselementachse in den Verriegelungszustand überführbar, um somit die erste Komponente beweglich mit der zweiten Komponente zu koppeln.

Damit also das Verbindungselement gegenüber dem Aufnahmeelement in die von der ersten Orientierung abweichende, zweite Orientierung gebracht werden kann, erfolgt eine Drehung um die Verbindungselementachse, was zum oben erläuterten Verriegelungszustand führt. Es kann vorgesehen sein, dass diese Drehung allerdings nur dann erfolgen kann, wenn sich der erste Endbereich des Verbindungselements vollständig innerhalb des Innenaussparungsbereichs des Aufnahmeelements befindet. Wenn sich beispielsweise der erste Endbereich des Verbindungselements im Öffnungsaussparungsbereich des Aufnahmeelements befindet, dann wäre eine Drehung unterbunden, da insbesondere der erste Endbereich in seiner ersten Querausdehnung größer ist als der Öffnungsaussparungsbereich in dessen erster Querabmessung. Da der Halsbereich des Verbindungselements aber in radialer Richtung eine kleinere Querausdehnung aufweist als der Öffnungsaussparungsbereich, lässt sich der Halbereich hingegen vollständig innerhalb des Öffnungsaussparungsbereichs drehen. Auch dies wird in der Figurenbeschreibung noch genauer ersichtlich werden.

Gemäß einer Ausführungsform ist das Herausbewegen des Verbindungselements aus dem Aussparungsbereich im Verriegelungszustand durch ein Zusammenwirken des ersten Endbereichs mit dem Öffnungsaussparungsbereich, insbesondere mit einer Öffnungsbegrenzung des Öffnungsaussparungsbereichs, blockiert.

Dies wird dadurch erreicht, dass die erste Querausdehnung des Endbereichs größer ist als die erste Querabmessung des Öffnungsaussparungsbereichs, so dass der erste Endbereich nicht durch die durch den Öffnungsaussparungsbereich definierte Öffnung hindurchpasst, wenn sich das Verbindungselement in einer von der ersten Orientierung zum Aufnahmeelement abweichenden, zweiten Orientierung befindet. Das genannte Zusammenwirken kann dabei durch ein Anstoßen bzw. einen Kontakt zwischen dem ersten Endbereich und einem den Öffnungsaussparungsbereich bildenden Materialvorsprung der Öffnungsbegrenzung, charakterisiert sein.

Gemäß einer Ausführungsform befinden sich das Verbindungselement und das Aufnahmeelement in der vorgegebenen ersten Orientierung zueinander, wenn die erste Querabmessung des Öffnungsaussparungsbereichs im Wesentlichen oder genau senkrecht zur ersten Querausdehnung des ersten Endbereichs liegt.

Denn es kann vorgesehen sein, dass der erste Endbereich aufgrund seiner Form und/oder Größe einzig und allein in dieser ersten Orientierung durch den Öffnungsaussparungsbereich hindurchpasst.

Gemäß einer Ausführungsform befinden sich das Verbindungselement und das Aufnahmeelement in der vorgegebenen zweiten Orientierung zueinander, wenn die erste Querabmessung des Öffnungsaussparungsbereichs nicht senkrecht zur ersten Querausdehnung des ersten Endbereichs ausgerichtet ist.

Die zweite Orientierung kann also durch eine Vielzahl verschiedener Orientierungen gegeben sein, solange die erste Querabmessung des Öffnungsaussparungsbereichs nicht senkrecht zur ersten Querausdehnung des ersten Endbereichs ausgerichtet ist. Mit anderen Worten kann es mehrere zweite Orientierungen geben, nämlich alle diejenigen Orientierungen, bei denen die erste Querabmessung des Öffnungsaussparungsbereichs nicht senkrecht zur ersten Querausdehnung des ersten Endbereichs liegt, wobei in sämtlichen zweiten Orientierungen der erste Endbereich aufgrund seiner Form und/oder Größe nicht durch den Öffnungsaussparungsbereich hindurchpasst und somit ein Herausbewegen des ersten Endbereichs aus dem Innenaussparungsbereich blockiert ist.

Gemäß einer Ausführungsform weist der Innenaussparungsbereich zumindest teilweise eine Kugelsegmentoberfläche auf und der erste Endbereich weist ebenfalls zumindest teilweise eine Kugelsegmentoberfläche auf.

Somit kann eine Art Kugelgelenkverbindung bereitgestellt werden, so dass eine Rotationsbewegung im Verriegelungszustand zu einer Rotation des Verbindungselements in Bezug auf das Aufnahmeelement möglich ist. Die Kugelsegmentoberfläche des ersten Endbereichs kann eine Kugelform definieren, die sich um den ersten Endbereich erstreckt, abgesehen von der Anbindungsstelle des ersten Endbereichs an den Halsbereich des Verbindungselements. Mit anderen Worten kann der erste Endbereich damit eine Art Gelenkkugel und der Innenaussparungsbereich die korrespondierende Gelenkpfanne bilden. Dies bietet den Vorteil einer vergleichsweise großen Kontaktfläche innerhalb der Gelenkverbindung, was auch die übertragbaren Lasten erhöht.

Gemäß einer Ausführungsform weist der Innenaussparungsbereich eine Innenfläche auf, die mit einer Beschichtung versehen ist. Alternativ oder zusätzlich weist der erste Endbereich eine Außenfläche auf, die mit einer Beschichtung versehen ist.

Dadurch kann eine Dämpfungsfunktion für Stoßbelastungen oder Vibrationen bereitgestellt werden, welche sowohl die mechanischen als auch die akustischen Eigenschaften bei einer Systemintegration der Gelenkverbindung verbessern. Ferner kann eine mechanische Schutzfunktion bereitgestellt werden, beispielsweise indem die Beschichtung eine verschleißfeste Beschichtung ist, welche den Abrieb bei einer relativen Bewegung des ersten Endbereichs innerhalb des Innenaussparungsbereichs verringert. Die Beschichtung kann eine Reibung zwischen diesen beiden Komponenten verringern. Die Beschichtung kann eine Teflonbeschichtung oder eine Silikonbeschichtung sein. Durch die Beschichtung und die verwendeten Materialien für das Verbindungelement und das Aufnahmeelement kann eine korrosionsbeständige und stoßbelastungsresistente Gelenkverbindung bereitgestellt werden.

Gemäß einem Aspekt ist ein Luftfahrzeug mit einer Gelenkverbindung, wie zuvor und nachfolgend beschrieben, angegeben.

Die Gelenkverbindung kann Teil einer Fachwerkstruktur oder Aufhängung innerhalb des Luftfahrzeugs sein. Es sei jedoch verstanden, dass die erfindungsgemäße Gelenkverbindung auch in anderen Einsatzgebieten Verwendung finden kann, beispielsweise im Fahrzeugbau, im Schiffsbau oder ganz allgemeinen im Transportwesen. Zum Beispiel kann die Gelenkverbindung zur Beförderung von Lasten verwendet werden, wenn eine bewegliche Befestigung der Last an dem jeweiligen Transportmittel benötigt wird. Dementsprechend kann die Gelenkverbindung beim Containertransport mittels Krananlagen eingesetzt werden, usw. Ebenso kommt der Einsatz der Gelenkverbindung auch in stationären Einrichtungen in Betracht, beispielsweise in Gebäuden.

Gemäß einem Aspekt ist ein Verfahren zum Herstellen einer beweglichen Befestigung einer ersten Komponente an einer zweiten Komponente angegeben. In einem Schritt erfolgt ein Bereitstellen eines Aufnahmeelements mit einen Aussparungsbereich, der einen Öffnungsaussparungsbereich an einer Oberfläche des Aufnahmeelements und einen Innenaussparungsbereich umfasst, wobei der Innenaussparungsbereich entlang einer Aussparungsachse über den Öffnungsaussparungsbereich zugänglich ist. Der Innenaussparungsbereich weist eine erste Querabmessung auf, die größer ist als eine erste Querabmessung des Öffnungsaussparungsbereichs. In einem weiteren Schritt erfolgt ein Bereitstellen eines Verbindungselements mit einem Halsbereich und einem ersten Endbereich, wobei der Halsbereich und der erste Endbereich entlang einer Verbindungselementachse angeordnet sind. Der erste Endbereich weist eine erste Querausdehnung auf, die größer ist als eine erste Querausdehnung des Halsbereichs. In einem sich anschließenden, optionalen Schritt erfolgt ein Verschieben des Verbindungselements entlang der Aussparungsachse in Richtung des Aussparungsbereichs, so dass sich das Verbindungselement durch Zusammenwirken mit einer Begrenzungsfläche des Öffnungsaussparungsbereichs gegenüber dem Aufnahmeelement selbst zentriert. In einem weiteren Schritt erfolgt ein Einführen bzw. Einschieben des Verbindungselements in den Aussparungsbereich des Aufnahmeelements, wenn sich das Verbindungselement und das Aufnahmeelement in einer vorgegebenen ersten Orientierung zueinander befinden, wobei insbesondere die Verbindungselementachse und die Aussparungsachse aufeinander liegen oder parallel zueinander liegen. In einem weiteren Schritt erfolgt ein Überführen des Verbindungselements innerhalb des Aussparungsbereichs des Aufnahmeelements in einen Verriegelungszustand, bei dem sich das Verbindungselement und das Aufnahmeelement in einer vorgegebenen zweiten Orientierung zueinander befinden, so dass ein Herausbewegen des Verbindungselements aus dem Aussparungsbereich unterbunden ist. Die genannten Schritte des Verfahrens können insbesondere in der angegebenen Reihenfolge ausgeführt werden.

Kurze Beschreibung der Figuren
- Fig. 1: zeigt eine Draufsicht auf ein Aufnahmeelement gemäß einem Ausführungsbeispiel.
- Fig. 2: zeigt eine Seitenansicht des Aufnahmeelements von Fig. 1 gemäß einem Ausführungsbeispiel.
- Fig. 3: zeigt eine Vorderansicht des Aufnahmeelements von Fig. 1 gemäß einem Ausführungsbeispiel.
- Fig. 4: zeigt eine Draufsicht auf ein Verbindungselement gemäß einem Ausführungsbeispiel.
- Fig. 5: zeigt eine Seitenansicht des Verbindungselements von Fig. 4 gemäß einem Ausführungsbeispiel.
- Fig. 6: zeigt eine Vorderansicht des Verbindungselements von Fig. 4 gemäß einem Ausführungsbeispiel.
- Fig. 7: zeigt ein Verbindungselement und ein Aufnahmeelement in einem demontierten Zustand gemäß einem Ausführungsbeispiel.
- Fig. 8: zeigt ein Verbindungselement und ein Aufnahmeelement während eines Montageprozesses gemäß einem Ausführungsbeispiel.
- Fig. 9: zeigt eine Gelenkverbindung mit einem Verbindungselement und einem Aufnahmeelement in einem montierten Zustand gemäß einem Ausführungsbeispiel.
- Fig. 10: zeigt ein System mit einer Gelenkverbindung und einer Verriegelungseinheit gemäß einem Ausführungsbeispiel.
- Fig. 11: zeigt eine Aufhängung mit mehreren Gelenkverbindungen gemäß einem Ausführungsbeispiel.
- Fig. 12: zeigt ein Transportmittel mit Gelenkverbindungen gemäß einem Ausführungsbeispiel.
- Fig. 13: zeigt ein Luftfahrzeug mit einer Gelenkverbindung gemäß einem Ausführungsbeispiel.
- Fig. 14: zeigt ein Flussdiagramm für ein Verfahren zum Herstellen einer beweglichen Befestigung einer ersten Komponente an einer zweiten Komponente gemäß einem Ausführungsbeispiel.

### Detaillierte Beschreibung beispielhafter Ausführungsformen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

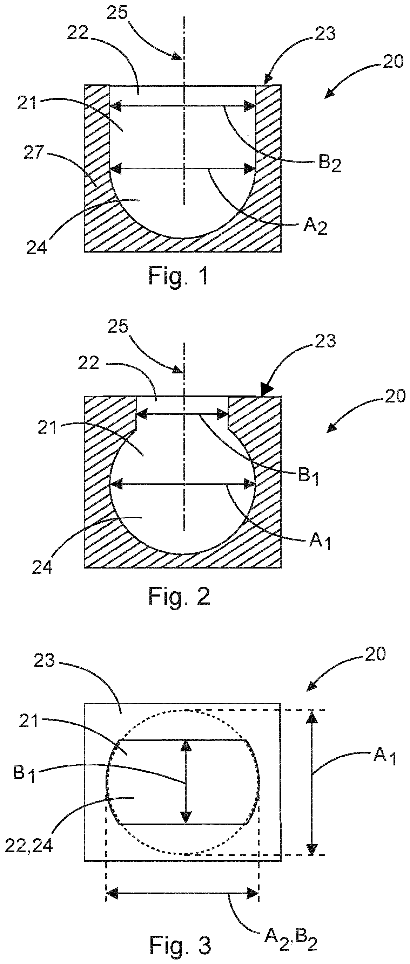

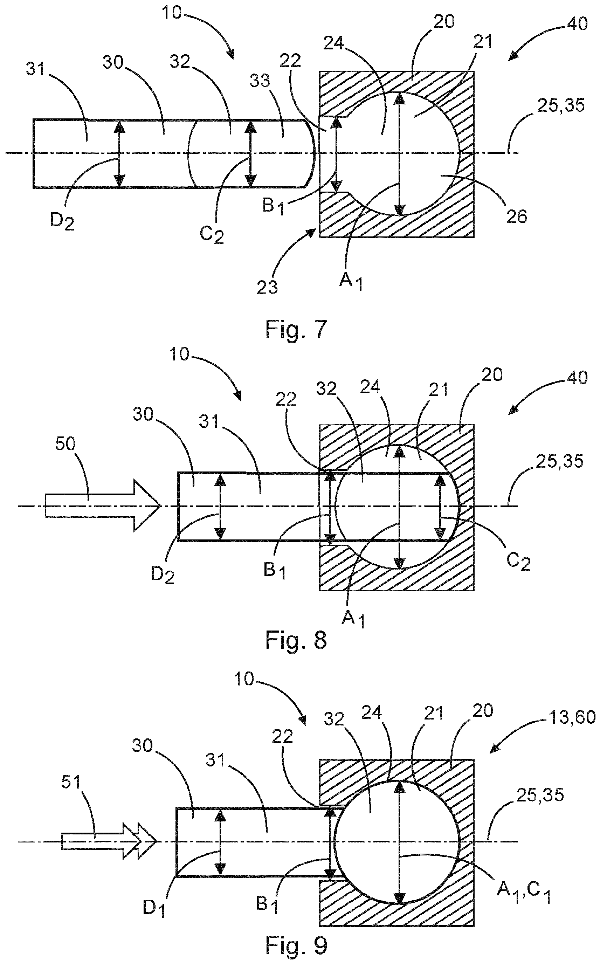

Fig. 1 zeigt eine Draufsicht auf ein Aufnahmeelement 20 für eine Gelenkverbindung, insbesondere für die in den Figuren 7 bis 10 beschriebene Gelenkverbindung 10. Die in den Figuren 1, 2 und 7 bis 10 gezeigten Darstellungen des Aufnahmeelements 20 repräsentieren jeweils eine Schnittansicht des Aufnahmeelements 20, wobei der Schnitt dieser Schnittansichten jeweils durch eine Stelle des größten Durchmessers des Aussparungsbereichs 21 verlaufen mag. Das Aufnahmeelement 20 weist einen Aussparungsbereich 21 auf, der sich in einen Öffnungsaussparungsbereich 22 im Bereich einer Oberfläche 23 des Aufnahmeelements 20 und einen Innenaussparungsbereich 24 in einem Zentralbereich des Aufnahmeelements 20 aufteilt. Der Innenaussparungsbereich 24 ist entlang einer Aussparungsachse 25 über den Öffnungsaussparungsbereich 22 zugänglich. Das heißt der Innenaussparungsbereich 24 und der Öffnungsaussparungsbereich 22 sind entlang der Aussparungsachse 25 miteinander verbunden. Das Aufnahmeelement 20 bildet einen Materialkörper 27, der beispielsweise ein metallisches Material oder ein Kunststoffmaterial umfasst, wobei der Materialkörper 27 den Aussparungsbereich 21 im Inneren des Aufnahmeelements 20 definiert. Wie zu erkennen ist, weist der Innenaussparungsbereich 24 zumindest teilweise eine kugelsegmentförmige Innenoberfläche auf, die hier halbkugelsegmentförmig ausgebildet ist.

Fig. 2 zeigt eine Seitenansicht des Aufnahmeelements 20 von Fig. 1. Ein Vergleich der Figuren 1 und 2, das heißt der Draufsicht und der Seitenansicht des Aufnahmeelements 20, verdeutlicht, dass das Aufnahmeelement 20 in beiden Ansichten verschiedene Querschnitte aufweist. Die beiden Ansichten der Figuren 1 und 2 sind im vorliegenden Fall senkrecht zueinander gerichtet. In der Seitenansicht der Figur 2 ist zu erkennen, dass der Innenaussparungsbereich 24 eine erste Querabmessung A₁ aufweist, die größer ist als eine erste Querabmessung B₁ des Öffnungsaussparungsbereichs 22. Das heißt in der Seitenansicht findet eine zumindest teilweise Verjüngung des Querschnittes ausgehend vom Innenaussparungsbereich 24 hin zum Öffnungsaussparungsbereich 22 statt. Die Verjüngung erfolgt in Form einer gekrümmten Kontur. In der Draufsicht der Figur 1 ist hingegen zu erkennen, dass ein kontinuierlicher Übergang ohne Querschnittsänderung zwischen Innenaussparungsbereich 24 und Öffnungsaussparungsbereich 22 gegeben ist. In der Draufsicht weist der Innenaussparungsbereich 24 somit eine zweite Querabmessung A2 auf, die im Wesentlichen gleich oder genau gleich einer zweiten Querabmessung B2 des Öffnungsaussparungsbereichs 22 ist. Mit anderen Worten umfasst das Aufnahmeelement 20 eine Hinterschneidung in die erste Querabmessungsrichtung (vgl. Fig. 2), wobei eine Hinterschneidung in die zweite Querabmessungsrichtung nicht vorgesehen ist (vgl. Fig. 1).

Zum besseren Verständnis zeigt Fig. 3 eine Vorderansicht des Aufnahmeelements 20 der Figuren 1 und 2. Hier ist die Hinterschneidung in die erste Querabmessungsrichtung erkennbar, wobei sich die Hinterschneidung dadurch ergibt, dass die erste Querabmessung A₁ des Innenaussparungsbereichs 24 größer ist als die erste Querabmessung B₁ des Öffnungsaussparungsbereich 22. Dagegen sind die zweiten Querabmessung A₂ und B₂ des Innenaussparungsbereichs 24 bzw. des Öffnungsaussparungsbereich 22 gleich groß, so dass sich in die zweite Querabmessungsrichtung keine Hinterschneidung ergibt.

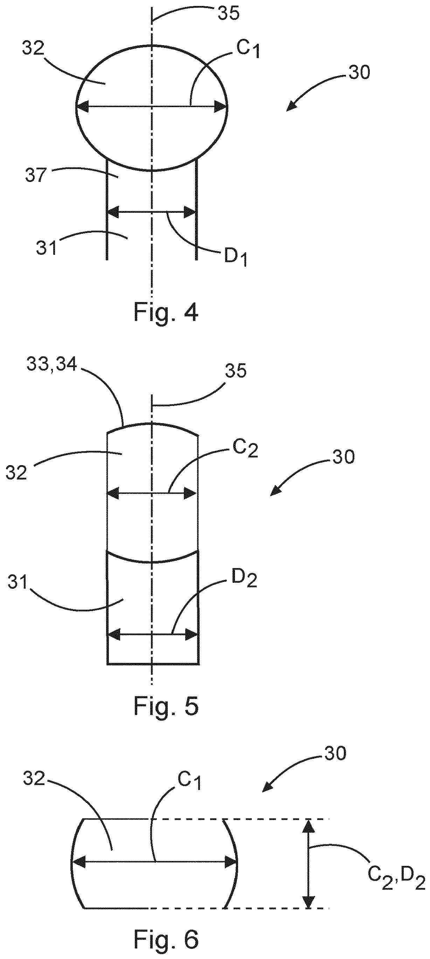

Fig. 4 zeigt eine Draufsicht auf ein Verbindungselement 30 für eine Gelenkverbindung, insbesondere für die in den Figuren 7 bis 10 beschriebene Gelenkverbindung 10. Das Verbindungselement 30 weist einen länglichen oder stabförmigen Halsbereich 31 und einen ersten Endbereich 32 mit einer gekrümmten Oberflächenkontur 33 auf. Die gekrümmte Oberflächenkontur 33 weist dabei die Form einer Kugeloberfläche auf, die sich zumindest teilweise um den ersten Endbereich 32 herum erstreckt, abgesehen von einer Verbindungsstelle, die den ersten Endbereich 32 mit dem Halsbereich 31 verbindet. Der Halsbereich 31 und der erste Endbereich 32 sind entlang einer Verbindungselementachse 35 angeordnet. Das heißt der erste Endbereich 32 und der Halsbereich 31 sind entlang der Verbindungselementachse 35 miteinander verbunden. Das Verbindungselement 30 bildet einen Materialkörper 37, der beispielsweise ein metallisches Material oder ein Kunststoffmaterial umfasst, wobei der Materialkörper 37 den ersten Endbereich 32 sowie den Halsbereich 31 des Verbindungselements 30 definiert.

Fig. 5 zeigt eine Seitenansicht des Verbindungselements 30 von Fig. 4. Ein Vergleich der Figuren 4 und 5, das heißt der Draufsicht und der Seitenansicht des Verbindungselements 30, verdeutlicht, dass das Verbindungselement 30 in beiden Ansichten verschiedene Querschnitte aufweist. Die beiden Ansichten der Figuren 4 und 5 sind im vorliegenden Fall senkrecht zueinander gerichtet. In der Draufsicht der Figur 4 ist zu erkennen, dass der erste Endbereich 32 eine erste Querausdehnung C₁ aufweist, die größer ist als eine erste Querausdehnung D₁ des Halsbereichs 31. Das heißt in der Draufsicht findet eine zumindest teilweise Verjüngung des Querschnittes ausgehend vom breitesten Querschnitt des ersten Endbereichs 32 hin zum Halsbereich 31 statt. Die Verjüngung erfolgt in Form einer gekrümmten Kontur. Die gekrümmte Kontur weist hier eine Kreisbogenform auf. In der Seitenansicht der Figur 5 ist hingegen zu erkennen, dass ein kontinuierlicher Übergang ohne Querschnittsänderung zwischen erstem Endbereich 32 und Halsbereich 31 gegeben ist. In der Seitenansicht der Fig. 5 weist der erste Endbereich 32 somit eine zweite Querausdehnung C₂ auf, die im Wesentlichen gleich oder genau gleich einer zweiten Querausdehnung D2 des Halsbereichs 31 ist.

Fig. 5 zeigt auch, dass die gekrümmte Oberflächenkontur 33 des ersten Endbereichs 32 einen Abschuss des Verbindungselements 30 bildet, das heißt dem Halsbereich 31 abgewandt ist. Diese gekrümmte Oberflächenkontur 33 am Abschluss des Verbindungselements bietet Vorteile für eine Selbstzentrierungsfunktion beim Einführen des Verbindungselements 30 in das Aufnahmeelement 20, wie in den Figuren 7 und 8 dargestellt.

Fig. 6 zeigt noch die Vorderansicht des Verbindungselements 30 der Figuren 4 und 5. Wie zu erkennen ist, weisen auch die lateralen Enden (bezogen auf die erste Querausdehnungsrichtung) des ersten Endbereichs 32 eine gekrümmte Form auf. Ebenso dargestellt sind die jeweiligen zweiten Querausdehnungen C₂ und D₂ des ersten Endbereichs 32 bzw. des Halsbereichs 31, wobei in der in Fig. 6 dargestellten Ansicht der Halsbereich 31 durch den ersten Endbereich 32 vollständig verdeckt wird.

Fig. 7 zeigt das Verbindungselement 30 der Figuren 4 bis 6 sowie das Aufnahmeelement 20 der Figuren 1 bis 3, wobei beide Teile 20, 30 in einem demontierten Zustand dargestellt sind. Das Verbindungselement 30 und das Aufnahmeelement 20 befinden sich in einer vorgegebenen ersten Orientierung 40 zueinander. Das heißt beide Teile 20, 30 sind in einer bestimmten Ausrichtung relativ zueinander angeordnet, so dass die erste Querabmessung B₁ des Öffnungsaussparungsbereichs 22 senkrecht zur ersten Querausdehnung C₁ des ersten Endbereichs 32 liegt. Die erste Querausdehnung C₁ zeigt in Fig. 7 senkrecht in die Zeichenebene hinein. Wie zu erkennen ist, ist die zweite Querausdehnung C₂ des ersten Endbereichs 32 etwas kleiner als die erste Querabmessung B₁ des Öffnungsaussparungsbereichs 22, so dass das Verbindungselement 30 anschließend, nach Verbringung in die erste Orientierung 40, in den Aussparungsbereich 21 des Aufnahmeelements 20 eingeführt werden kann. Sollte der erste Endbereich 32 in einer von der ersten Orientierung 40 abweichenden Orientierung auf den Öffnungsaussparungsbereich bzw. auf die Oberfläche 23 des Aufnahmeelements 20 auftreffen, so kann das Verbindungselement 30 nicht unmittelbar in den Aussparungsbereich 21 eingeführt werden, allerdings kann sich das Verbindungselement 30 selbsttätig in die erste Orientierung 40 bezüglich des Aufnahmeelements 20 zentrieren. Dies wird durch die gekrümmten Oberfläche 33 des ersten Endbereichs 32 (vgl. Fig. 5) sowie die gekrümmten lateralen Oberflächen des ersten Endbereichs 32 (vgl. Fig. 6) ermöglicht, da diese gekrümmten Oberflächen beim Kontakt an der Öffnungsbegrenzung des Öffnungsaussparungsbereichs 22 abgleiten können, so dass sich das Verbindungselement 30 gegenüber dem Aufnahmeelement 20 dreht und damit selbsttätig zentriert.

In der ersten Orientierung 40 sind, wie in Fig. 7 dargestellt, die zweiten Querausdehnungen C₂ und D₂ des ersten Endbereichs 32 bzw. des Halsbereichs 31 parallel zu den ersten Querabmessungen A₁ und B₁ des Innenaussparungsbereichs 24 bzw. des Öffnungsaussparungsbereichs 22 angeordnet. Befindet sich das Verbindungselement 30 in Bezug zu dem Aufnahmeelement 20 nun in der ersten Orientierung 40 oder hat sich das Verbindungselement 30 selbst zu dieser ersten Orientierung 40 hin zentriert, dann kann das Verbindungselement 30 in den Aussparungsbereich 21 eingeführt werden, was in Fig. 8 durch den Pfeil 50 gekennzeichnet ist. Das Verbindungselement 30 wird also durch Verschieben 50 des Verbindungselements 30 in Pfeilrichtung entlang der Aussparungsachse 25 in den Aussparungsbereich 21 eingeführt. Dabei liegen die Verbindungselementachse 35 und die Aussparungsachse 25 aufeinander oder sind jedenfalls parallel zueinander angeordnet.

Fig. 8 zeigt das Verbindungselement 30 und das Aufnahmeelement 20 noch während eines Montageprozesses. Es ist zu erkennen, dass das Verbindungselement 30 quasi bis zum Anschlag in den Aussparungsbereich 21 des Aufnahmeelements 20 eingeschoben wurde. In diesem Montagezustand befindet sich der erste Endbereich 32 vollständig im Innenaussparungsbereich 24 des Aufnahmeelements 20. Allerdings befinden sich das Aufnahmeelement 20 und das Verbindungselement 30 weiterhin in der ersten Orientierung 40 zueinander, so dass ein Herausbewegen des Verbindungselements 30 aus dem Aussparungsbereich 21 noch möglich ist.

Fig. 9 zeigt die Gelenkverbindung 10 die durch den in Fig. 8 beschrieben Montageprozess entstanden ist. Die Gelenkverbindung umfasst das Verbindungselement 30 und das Aufnahmeelement 20 in einem montierten Zustand, der auch als Verriegelungszustand 13 bezeichnet wird. Das Verbindungselement 30 wurde also innerhalb des Aussparungsbereichs 21 des Aufnahmeelements 20 in den Verriegelungszustand 13 überführt, bei dem sich das Verbindungselement 30 und das Aufnahmeelement 20 in einer vorgegebenen zweiten Orientierung 60 zueinander befinden, so dass ein Herausbewegen des Verbindungselements 30 aus dem Aussparungsbereich 21 unterbunden ist. Das Verbindungselement 30 wurde insbesondere innerhalb des Aussparungsbereichs 21 des Aufnahmeelements 20 durch eine Drehbewegung 51 (dargestellt durch Doppelpfeil) um die Verbindungselementachse 35 in den Verriegelungszustand 13 überführt. Dieser Verriegelungszustand 13 kann durch mehrere verschiedene zweite Orientierungen 60 des Verbindungselements 30 bezüglich des Aufnahmeelements 20 zueinander gegeben sein, solange die erste Querabmessung B₁ des Öffnungsaussparungsbereichs 22 nicht senkrecht zur ersten Querausdehnung C₁ des ersten Endbereichs 32 steht, wobei zum Vergleich der senkrechte Zustand in den Figuren 7 und 8 dargestellt ist. Mit anderen Worten kann es mehrere zweite Orientierungen 60 geben, nämlich alle diejenigen Orientierungen 60, bei denen die erste Querabmessung B₁ des Öffnungsaussparungsbereichs 24 nicht senkrecht zur ersten Querausdehnung C₁ des ersten Endbereichs 32 liegt, wobei in sämtlichen zweiten Orientierungen 60 der erste Endbereich 32 aufgrund seiner Form und/oder Größe nicht durch den Öffnungsaussparungsbereich 22 hindurchpasst und somit ein Herausbewegen des ersten Endbereichs 32 aus dem Innenaussparungsbereich 24 blockiert ist. Dieser blockierte bzw. verriegelte Zustand 13 ist in Fig. 9 dargestellt, wobei in dem konkret dargestellten Fall das Verbindungselement 30 während der Drehbewegung 51 um 90° gegenüber dem Aufnahmeelement 20 gedreht wurde, um beide Teile 20, 30 miteinander zu verriegeln, so dass hier die ersten Querabmessungen A₁, B₁ des Innenaussparungsbereichs 22 bzw. des Öffnungsaussparungsbereichs 22 nun parallel zu den Querausdehnungen C₁ und D₁ des ersten Endbereichs 32 bzw. des Halsbereichs 31 angeordnet sind. Ein Herausbewegen des Verbindungselements 30 aus dem Aussparungsbereich 21 ist im Verriegelungszustand 13 durch ein Zusammenwirken des ersten Endbereichs 32 mit der Öffnungsbegrenzung im Öffnungsaussparungsbereich 22 blockiert. Aufgrund der kugelgelenkartigen Verbindung, welche die Gelenkverbindung 10 kennzeichnet, ist das Aufnahmeelement 20 stets beweglich gegenüber dem Verbindungelement 30 gelagert, so dass die Verbindungselementachse 35 und die Aussparungsachse 25 im Einsatz einen von Null verschiedenen variablen Winkel einschließen können, das heißt nicht parallel zueinander sein müssen. Schließlich wird durch die Gelenkverbindung 10 eine bewegliche Kopplung zweier Komponenten bereitgestellt.

Um im Verriegelungszustand 13, das heißt im Einsatz der Gelenkverbindung 10, eine Reibung zwischen dem Innenaussparungsbereich 24 und dem darin befindlichen ersten Endbereich 32 zu verringern, kann der Innenaussparungsbereich 24 eine Innenfläche 26 (Fig. 7) aufweisen, die mit einer Beschichtung versehen ist. Ebenso kann der erste Endbereich 32 eine Außenfläche 34 (Fig. 5) aufweisen, die mit einer Beschichtung versehen ist. Es sei angemerkt, dass die in den Figuren dargestellten Querabmessungen A₁, A₂, B₁, B₂ und Querausdehnungen C₁, C₂, D₁, D₂ jeweils Richtungsvektoren angeben können.

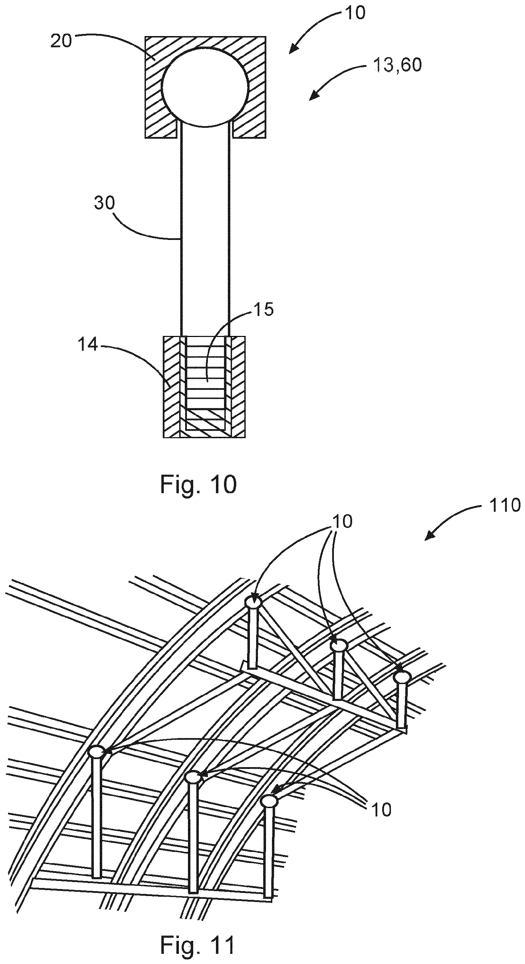

Fig. 10 zeigt die in Fig. 9 hergestellte Gelenkverbindung 10 mit einer Verriegelungseinheit 14. Fig. 10 zeigt insbesondere ein System mit der Gelenkverbindung 10 und der Verriegelungseinheit 14. Die Verriegelungseinheit 14 weist einen Mechanismus 15 auf, der eine Drehung des Verbindungselements 30 gegenüber dem Aufnahmeelement 20 bewirkt und eine bestimmte Drehstellung im Verriegelungszustand 13 arretieren kann, so dass das

Verbindungselement 30 und das Aufnahmeelement 20 im Verriegelungszustand 13, wie in Fig. 9 gezeigt, verbleiben, wobei der Verriegelungszustand 13 zwar eine Rotationsbewegung des Verbindungselements 30 gegenüber dem Aufnahmeelement 20 erlaubt, jedoch ein Herausbewegen des Verbindungselements 30 aus dem Aufnahmeelement 20 unterbunden ist, wie zuvor beschrieben. In Bezug auf Fig. 10 wird das Verbindungselement 30 zunächst in das Aufnahmeelement 20 verschoben und anschließend durch die Drehung des Verbindungselements 30 in den arretierten Zustand, das heißt den Verriegelungszustand 13, verbracht.

Fig. 11 zeigt eine Aufhängung 110 bzw. eine Fachwerkstruktur 110 mit mehreren Gelenkverbindungen 10, die innerhalb der Aufhängung 110 angeordnet sind, um bewegliche, das heißt flexible, Lastübertragungspunkte innerhalb der Aufhängung 110 bereitzustellen. Die Aufhängung 110 kann Teil eines Fahrzeugs bzw. Luftfahrzeugs sein. Insbesondere kann die Aufhängung 110 über die Gelenkverbindungen 10 mit einer Primärstruktur, wie Spanten und Stringer des Fahrzeugs bzw. Luftfahrzeugs, gekoppelt sein.

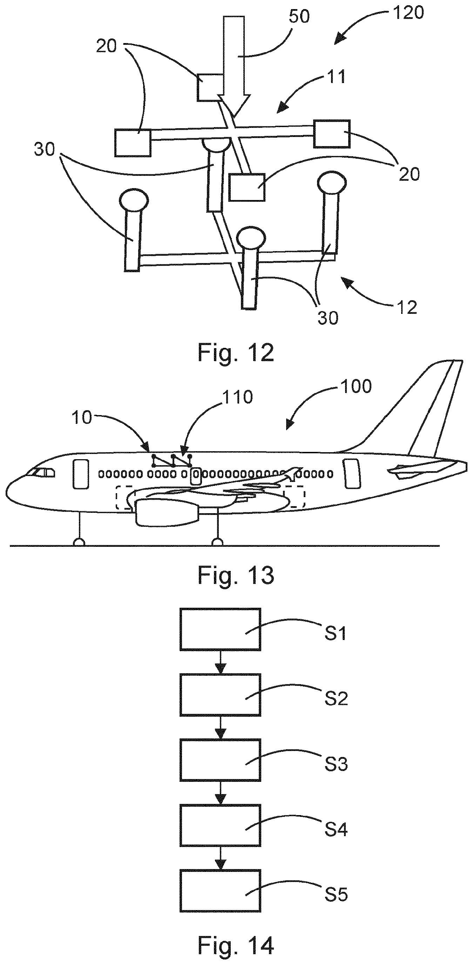

Fig. 12 zeigt einen Ausschnitt eines Transportmittels 120 mit vier demontierten Gelenkverbindungen 10. Das Transportmittel 120 kann eine Drohne, ein Hubschrauber oder dergleichen sein. In dem gezeigten Beispiel sind vier Aufnahmeelemente 20 an dem Transportmittel 120, welches die erste Komponente 11 in Form einer Befestigungseinheit umfasst, dargestellt. Diese vier Aufnahmeelemente 20 stehen jeweils vier korrespondierenden Verbindungselementen 30 gegenüber, mit denen sie durch die Verschiebung 50 in Eingriff kommen können, um vier Gelenkverbindungen 10 zu bilden, so dass die zweite Komponente 12, die in Form einer Lasteinheit vorliegt, über die damit hergestellten Gelenkverbindungen 10 an der ersten Komponente 11 des Transportmittels 120 beweglich befestigt werden kann.

Fig. 13 zeigt ein Luftfahrzeug 100 mit einer Gelenkverbindung 10. Wie zuvor erläutert, kann die Gelenkverbindung 10 Teil einer Aufhängung 110 des Luftfahrzeugs sein. Insbesondere kann die Gelenkverbindungen 10 mit einer Primärstruktur des Luftfahrzeugs, wie Spanten und Stringer, gekoppelt sein.

Fig. 14 zeigt ein Flussdiagramm für ein Verfahren zum Herstellen einer beweglichen Befestigung einer ersten Komponente 11 an einer zweiten Komponente 12. In einem Schritt S1 des Verfahrens erfolgt ein Bereitstellen eines Aufnahmeelements 20 mit einem Aussparungsbereich 21, der einen Öffnungsaussparungsbereich 22 an einer Oberfläche 23 des Aufnahmeelements 20 und einen Innenaussparungsbereich 24 umfasst, wobei der Innenaussparungsbereich 24 entlang einer Aussparungsachse 25 über den Öffnungsaussparungsbereich 22 zugänglich ist und wobei der Innenaussparungsbereich 24 eine erste Querabmessung A₁ aufweist, die größer ist als eine erste Querabmessung B₁ des Öffnungsaussparungsbereichs 22. In einem zweiten Schritt S2 erfolgt ein Bereitstellen eines Verbindungselements 30 mit einem Halsbereich 31 und einem ersten Endbereich 32, wobei der Halsbereich 31 und der erste Endbereich 32 entlang einer Verbindungselementachse 35 angeordnet sind, wobei der erste Endbereich 32 eine erste Querausdehnung C₁ aufweist, die größer ist als eine erste Querausdehnung D₁ des Halsbereichs 31. In einem weiteren Schritt S3 erfolgt ein Verschieben 50 des Verbindungselements 30 entlang der Aussparungsachse 25 in Richtung des Aussparungsbereichs 21, so dass sich das Verbindungselement 30 durch Zusammenwirken mit dem Öffnungsaussparungsbereich 22 gegenüber dem Aufnahmeelement 2 selbst zentriert. In einem weiteren Schritt S4 erfolgt ein Einführen des Verbindungselements 30 in den Aussparungsbereich 21 des Aufnahmeelements 20, wenn sich das Verbindungselement 30 und das Aufnahmeelement 20 in einer vorgegebenen ersten Orientierung 40 zueinander befinden. In einem weiteren Schritt S5 erfolgt ein Überführen des Verbindungselements 30 in dem Aussparungsbereich 21 des Aufnahmeelements 20 in einen Verriegelungszustand 13, bei dem sich das Verbindungselement 30 und das Aufnahmeelement 20 in einer vorgegebenen zweiten Orientierung 60 zueinander befinden, so dass ein Herausbewegen des Verbindungselements 30 aus dem Aussparungsbereich 21 unterbunden ist.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Gelenkverbindung (10) zum beweglichen Koppeln einer ersten Komponente (11) an einer zweiten Komponente (12), aufweisend:
ein Aufnahmeelement (20);
ein Verbindungselement (30);
wobei das Aufnahmeelement (20) einen Aussparungsbereich (21) aufweist, der einen Öffnungsaussparungsbereich (22) an einer Oberfläche (23) des Aufnahmeelements (20) und einen Innenaussparungsbereich (24) umfasst, wobei der Innenaussparungsbereich (24) entlang einer Aussparungsachse (25) über den Öffnungsaussparungsbereich (22) zugänglich ist;
wobei der Innenaussparungsbereich (24) eine erste Querabmessung (A₁) aufweist, die größer ist als eine erste Querabmessung (B₁) des Öffnungsaussparungsbereichs (22);
wobei das Verbindungselement (30) einen Halsbereich (31) und einen ersten Endbereich (32) mit einer gekrümmten Oberflächenkontur (33) aufweist, wobei der Halsbereich (31) und der erste Endbereich (32) entlang einer Verbindungselementachse (35) angeordnet sind;
wobei der erste Endbereich (32) eine erste Querausdehnung (C₁) aufweist, die größer ist als eine erste Querausdehnung (D₁) des Halsbereichs (31);
wobei das Verbindungselement (30) in den Aussparungsbereich (21) des Aufnahmeelements (20) einführbar ist, wenn sich das Verbindungselement (30) und das Aufnahmeelement (20) in einer vorgegebenen ersten Orientierung (40) zueinander befinden;
wobei das Verbindungselement (30) in dem Aussparungsbereich (21) des Aufnahmeelements (20) in einen Verriegelungszustand (13) überführbar ist, bei dem sich das Verbindungselement (30) und das Aufnahmeelement (20) in einer vorgegebenen zweiten Orientierung (60) zueinander befinden, so dass ein Herausbewegen des Verbindungselements (30) aus dem Aussparungsbereich (21) unterbunden ist.

2. Gelenkverbindung (10) nach Anspruch 1,
wobei das Aufnahmeelement (20) im Verriegelungszustand (13) zumindest teilweise um den ersten Endbereich (32) des Verbindungselementes (30) rotierbar ist.

3. Gelenkverbindung (10) nach einem der vorhergehenden Ansprüche,
wobei das Verbindungselement (30) durch Verschieben (50) des Verbindungselements (30) entlang der Aussparungsachse (25) in den Aussparungsbereich (21) einführbar ist.

4. Gelenkverbindung (10) nach einem der vorhergehenden Ansprüche,
wobei das Verbindungselement (30) in dem Aussparungsbereich (21) des Aufnahmeelements (20) durch eine Drehbewegung (51) um die Verbindungselementachse (35) in den Verriegelungszustand (13) überführbar ist, um somit die erste Komponente (11) beweglich mit der zweiten Komponente (12) zu koppeln.

5. Gelenkverbindung (10) nach einem der vorhergehenden Ansprüche,
wobei das Herausbewegen des Verbindungselements (30) aus dem Aussparungsbereich (21) im Verriegelungszustand (13) durch ein Zusammenwirken des ersten Endbereichs (32) mit dem Öffnungsaussparungsbereich (22) blockiert ist.

6. Gelenkverbindung (10) nach einem der vorhergehenden Ansprüche,
wobei sich das Verbindungselement (30) und das Aufnahmeelement (20) in der vorgegebenen ersten Orientierung (40) zueinander befinden, wenn die erste Querabmessung (B₁) des Öffnungsaussparungsbereichs (22) senkrecht zur ersten Querausdehnung (C₁) des ersten Endbereichs (32) ausgerichtet ist.

7. Gelenkverbindung (10) nach einem der vorhergehenden Ansprüche,
wobei sich das Verbindungselement (30) und das Aufnahmeelement (20) in der vorgegebenen zweiten Orientierung (60) zueinander befinden, wenn die erste Querabmessung (B₁) des Öffnungsaussparungsbereichs (22) nicht senkrecht zur ersten Querausdehnung (C₁) des ersten Endbereichs (32) ausgerichtet ist.

8. Gelenkverbindung (10) nach einem der vorhergehenden Ansprüche,
wobei der Innenaussparungsbereich (24) zumindest teilweise eine Kugelsegmentoberfläche aufweist; und
wobei der erste Endbereich (32) zumindest teilweise eine Kugelsegmentoberfläche aufweist.

9. Gelenkverbindung (10) nach einem der vorhergehenden Ansprüche,
wobei der Innenaussparungsbereich (24) eine Innenfläche (26) aufweist, die mit einer Beschichtung versehen ist; und/oder
wobei der erste Endbereich (32) eine Außenfläche (34) aufweist, die mit einer Beschichtung versehen ist.

10. Luftfahrzeug (100) mit einer Gelenkverbindung (10) nach einem der vorhergehenden Ansprüche.

11. Verfahren zum Herstellen einer beweglichen Befestigung einer ersten Komponente (11) an einer zweiten Komponente (12), aufweisend:
Bereitstellen eines Aufnahmeelements (20) mit einen Aussparungsbereich (21), der einen Öffnungsaussparungsbereich (22) an einer Oberfläche (23) des Aufnahmeelements (20) und einen Innenaussparungsbereich (24) umfasst, wobei der Innenaussparungsbereich (24) entlang einer Aussparungsachse (25) über den Öffnungsaussparungsbereich (22) zugänglich ist, wobei der Innenaussparungsbereich (24) eine erste Querabmessung (A₁) aufweist, die größer ist als eine erste Querabmessung (B₁) des Öffnungsaussparungsbereichs (22, S1);
Bereitstellen eines Verbindungselements (30) mit einem Halsbereich (31) und einem ersten Endbereich (32), wobei der Halsbereich (31) und der erste Endbereich (32) entlang einer Verbindungselementachse (35) angeordnet sind, wobei der erste Endbereich (32) eine erste Querausdehnung (C₁) aufweist, die größer ist als eine erste Querausdehnung (D₁) des Halsbereichs (31, S2);
Einführen des Verbindungselements (30) in den Aussparungsbereich (21) des Aufnahmeelements (20), wenn sich das Verbindungselement (30) und das Aufnahmeelement (20) in einer vorgegebenen ersten Orientierung (40) zueinander befinden (S4);
Überführen des Verbindungselements (30) in dem Aussparungsbereich (21) des Aufnahmeelements (20) in einen Verriegelungszustand (13), bei dem sich das Verbindungselement (30) und das Aufnahmeelement (20) in einer vorgegebenen zweiten Orientierung (60) zueinander befinden, so dass ein Herausbewegen des Verbindungselements (30) aus dem Aussparungsbereich (21) unterbunden ist (S5).

12. Verfahren nach Anspruch 11,
Verschieben (50) des Verbindungselements (30) entlang der Aussparungsachse (25) in Richtung des Aussparungsbereichs (21), so dass sich das Verbindungselement (30) durch Zusammenwirken mit dem Öffnungsaussparungsbereich (22) gegenüber dem Aufnahmeelement (20) selbst zentriert (S3).
